# EUROPÄISCHE PATENTSCHRIFT

(11) **EP 3 070 463 B1**
(45) Veröffentlichungstag und Bekanntmachung des Hinweises auf die Patenterteilung: **04.05.2022**
(21) Anmeldenummer: 16161032.4
(22) Anmeldetag: 18.03.2016
(51) Int. Cl.: G01N 27/12, G01N 27/414, G01N 27/333

(54) **IONENSENSITIVE STRUKTUR UND VERFAHREN ZUR HERSTELLUNG DERSELBEN**
ION-SENSITIVE STRUCTURE AND METHOD FOR PREPARATION OF SAME
STRUCTURE SENSIBLE AUX IONS ET SON PROCEDE DE FABRICATION

(30) Priorität: 18.03.2015 DE 102015204921
(43) Veröffentlichungstag der Anmeldung: 21.09.2016
(73) Patentinhaber: Fraunhofer-Gesellschaft zur Förderung der angewandten Forschung e.V., 80686 München (DE)
(72) Erfinder: Kurth, Eberhard, 01468 Moritzburg (DE); Kunath, Christian, 01108 Dresden (DE); Schenk, Harald, 01109 Dresden (DE)
(74) Vertreter: Hersina, Günter

(56) Entgegenhaltungen:
- DE-A1-102013 109 353
- US-A1- 2005 156 584
- US-A1- 2006 024 975
- US-A1- 2012 018 722
- US-A1- 2012 139 011
- US-A1- 2015 060 953
- VL. KOLKOVSKY ET AL: "Reactively sputtered hafnium oxide on silicon dioxide: Structural and electrical properties", SOLID STATE ELECTRONICS., Bd. 106, 14. Februar 2015 (2015-02-14), Seiten 63-67, XP055287661, GB ISSN: 0038-1101, DOI: 10.1016/j.sse.2015.01.004
- Chia-Ming Yang ET AL: "HfO x F y Based ISFETs with Reactive Fluorine Doping for K + ion Detection", Int. J. Electrochem. Sci. International Journal of Int. J. Electrochem. Sci, 1. Januar 2014 (2014-01-01), Seiten 7069-7082, XP055287793, Gefunden im Internet: URL:http://www.electrochemsci.org/papers/v ol9/91207069.pdf

## Beschreibung

Die vorliegende Erfindung bezieht sich allgemein auf eine ionensensitive Struktur und auf ein Verfahren zum Herstellen derselben. Die ionensensitiven Strukturen sind u.a. in ionensensitiven Feldeffekt-Transistoren (ISFETs), ionensensitiven, kapazitiv auslesbaren EIS-Sensoren oder LAPS-Sensoren einsetzbar. Insbesondere bezieht sich die vorliegende Erfindung auf einen chemisch stabilen Mehrschichtaufbau mit dotierten Zonen.

In der Mikrosystemtechnik der Halbleitertechnologie werden für Sensoren und Aktoren in den verschiedensten Anwendungen, z.B. Umwelttechnologie, Prozessüberwachung, Lebensmittelindustrie sowie Biochemie oder Medizintechnik, chemisch stabile Oberflächen als chemischer Schutz für Sensor- bzw. Aktoroberflächen benötigt. Wenn die Vorzüge einer chemischen Schutzschicht auch als Sensor für Chemikalien genutzt werden können, ist das ein besonderer Vorteil für die Sensortechnologie, für eine geringe Langzeitdrift des Sensors, in Verbindung mit einem akzeptablen Preis. Als Anwendungen können dann insbesondere die oben aufgeführten Elektrolyt-Isolator-Halbleiter-Strukturen genannt werden, die auch speziell als ionensensitive Feldeffekt-Transistoren oder ionensensitive Sensoren mit EIS oder mit Licht-angesteuerten ionensensitiven Sensoren mit EIS (LAPS) ausgeführt werden können.

Als Halbleiter des EIS-Aufbaus wird meist Silizium verwendet. Alle anderen Halbleiter/Isolator-Kombinationen sind meist elektrisch nicht so stabil bzw. es ist die geforderte elektrische Langzeitstabilität und Genauigkeit nur mit höherem Aufwand erreichbar. Im Bereich der pH-Messanordnung ist ferner die Glaselektrode bekannt. Die Nachteile der Glaselektrode gegenüber den Halbleitersensoren sind jedoch hinlänglich bekannt, ebenso wie die EIS-Struktur für die Analytik genutzt wird. Mittlerweile sind Halbleiterfestkörperelektroden für pH-Messung in der industriellen Messtechnik im Einsatz, nicht nur aus Gründen der Glasbruchgefahr.

Der EIS-Sensor ohne FET-Struktur hat seinen Vorzug darin, dass keine Topologiekanten die Oberflächen stören, die ein Risiko für chemisch aggressive Medien darstellen, wie es noch beim ionensensitiven Feldeffekt-Transistor der Fall ist. Eine derartige Struktur ist aber nur über eine Kapazitätsmessung, die eine Messzelle mit Faraday-Käfig voraussetzt, auslesbar. Wegen immer wieder auftretender Topologiekanten ist eine geschlossene, chemisch stabile Schutzschicht umso wichtiger. Zur Herstellung wasserstoffionenempfindlicher Schichten werden bereits verschiedene Materialien, wie etwa Ta₂O₅ [2,3], AL₂O₃ [4], TiO₂ [5], HfO₂ [8] und einfache Metallnitride [10] oder Doppelmetalloxidgemische, wie etwa TaAlO und ZrAlO [6] oder Kombinationen zweier verschiedener amorpher Metalloxidschichten [11] und diamantähnlicher Kohlenstoff (Diamond like Carbon - DLC) [9], die mit wenigen Ausnahmen [7] thermodynamisch in wässeriger alkalischer und oxidativer Umgebung relativ stabil sind, beschrieben. Insbesondere mit der Einführung der Metalloxide wurden deutliche Verbesserungen der pH-Sensoreigenschaften sowie der Langzeitstabilität und Drift dieser Sensoren, insbesondere gegenüber dem Si₃N₄-ISFETs erreicht.

Konventionell werden Metalloxide abgeschieden und nur soweit getempert, dass ihre amorphe Struktur erhalten bleibt. Damit sind sie chemisch unbeständiger und lichtempfindlicher als ihre kristallinen Pendants in der Bulk-Chemie und unterliegen bei erhöhter Temperatur in korrosiven Medien einer planaren Ätzung.

Kristalline einfache Metalloxidschichten sind chemisch beständiger als amorphe Schichten, da die Kristallite eine dem Bulk-Material vergleichbare hohe Dichte aufweisen. Die Schwachstelle dieser Schichten sind die Korngrenzen der Kristallite, insbesondere die vertikalen, die eine Porenätzung und Folgen einer Unterätzung bei höherer Temperatur in aggressiven Medien zulassen. So kann ein stabiler Betrieb von gesputterten und bei kristallisiertem Ta₂O₅-ISFETs nur bis zu einem pH-Wert von ca. 12 und einer Temperatur bis 75°C gesichert werden.

Bei mehrschichtigen polykristallinen Metalloxiden einer Stoffart werden die vertikalen Korngrenzen nur unzureichend unterbrochen, da die Kristalle der ersten Schicht als Wachstumskeime für die zweite Schicht fungieren.

Mehrschichtige amorphe Metalloxide unterschiedlicher Stoffe sind zwar chemisch beständiger als einfache, jedoch konnten die Probleme, die mit amorphen Strukturen einhergehen, nicht zur Zufriedenheit gelöst werden.

Die Kristallisationen dieser Mehrlagen verschiedener Metalloxidschichten sind dann erwartungsgemäß wieder chemisch stabiler, jedoch führen die Grenzflächen zwischen den Stoffarten zu typischen Grenzflächenproblemen. Diese sind eine schlechte Reproduzierbarkeit der Flachbandspannung und sogenanntes Ladungstrapping.

Die Abscheidung von Metallen mit nachfolgender thermischer Oxidation [12] führt kinetisch bedingt zu einer schlechten Qualität der Halbleiter/Isolator-Kombination, wie etwa Si/SiO₂, da das Metall auf einem anliegenden Isolator (z.B. SiO₂) reduzierend wirkt und dadurch den Sauerstoff aus der Isolatorschicht teilweise entfernt. Dadurch entstehen feste Ladungen im Gate-Isolator, was Arbeitspunktverschiebungen des Sensors und Driften durch Trapping-Prozesse zur Folge hat. Die Trapping-Prozesse führen zu Leckströmen, die die chemische Stabilität des gesamten Isolatorstapels beeinträchtigen.

Reine Metalloxide haben die für ihren Stoff charakteristischen Eigenschaften, die sich von anderen Metalloxiden wesentlich unterscheiden können, wie beispielsweise HfO₂. Aufgrund seiner hervorragenden chemischen und physikalischen Eigenschaften als kristallines Bulk-Material kommt HfO₂ in letzter Zeit häufiger zur Anwendung, sowohl in der Sensorik als auch in der hochintegrierten Mikroprozessortechnologie. Solche Eigenschaften sind die außerordentlich hohen elektrischen Isolationswerte als auch die außerordentlich hohe chemische Beständigkeit in aggressiven Medien bis zu den gebräuchlicherweise höchsten angewendeten Temperaturen. Als Schicht jedoch hat es eine ausgeprägte Textur und vorwiegend vertikale Korngrenzen [14].

Die für die Stabilisierung und Verdichtung notwendigen Temperungen quittiert es mit ausgeprägten anisotropen thermischen Ausdehnungen, die an Topologiekanten zu Rissen in der Schicht führen können. Reine Metalloxide behalten meist die für ihren Stoff charakteristischen Eigenschaften auch im Stapel mit anderen. Ein Einpacken einer dicken HfO₂-Schicht zwischen einer Unterlage und einer Deckschicht aus einem zuvor und danach abgeschiedenen anderen Metalloxid, wie etwa Ta₂O₅ ändert nicht das wesentliche Verhalten des HfO₂. Auch wenn HfO₂ in einer oder mehreren dünnen amorphen Schichten abgeschieden und mit Ta₂O₅ getempert wird, sind die Ladungen an den Grenzflächen und in der HfO₂-Schicht selbst nur schwer beherrschbar. Die Folgen sind nicht so kleine Sensordriften und Lichtempfindlichkeiten, wie sie von Ta₂O₅ reproduzierbar einzustellen sind, wenn auch die chemischen Stabilitäten weitaus größer sind [16].

Metall-Oxynitride und auch Doppelmetall-Oxynitrid-Gemische wie etwa Verbindungen wie beispielsweise Hf_{X}Ta_{Y}OₐN_{b} [15] induzieren elektrisch schlecht beherrschbare Grenzflächen zwischen dem Oxynitrid und dem SiO₂.

DE 10 2013 109 353 A1 beschreibt ein Verfahren zur Herstellung einer ionensensitiven Struktur für einen ionensensitiven Sensor, bei dem zunächst ein mit einer Oxidschicht versehenes Halbleitersubstrat bereitgestellt wird.

Ausgehend von diesem Stand der Technik besteht somit die der vorliegenden Erfindung zugrunde liegende Aufgabe darin, eine möglichst unaufwendige Vorgehensweise zur Herstellung einer ionensensitiven Struktur für ionensensitive Sensoren zu schaffen, mit der eine möglichst hohe chemische und elektrische Langzeitstabilität als auch äußerst exakte und reproduzierbare Messergebnisse erhalten werden können.

Diese Aufgabe wird durch eine ionensensitive Struktur gemäß Anspruch 1, eine Elektrolyt-Isolator-Struktur gemäß Patentanspruch 8 und ein Verfahren zum Herstellen einer ionensensitiven Struktur gemäß Patentanspruch 10 gelöst.

Erfindungsgemäße Weiterbildungen sind in den Unteransprüchen definiert.

Die vorliegende Erfindung basiert auf der Erkenntnis, dass eine Dotierung einer Metalloxid-Zwischenschicht dafür genutzt werden kann, um eine Schicht zu erhalten, die eine hohe Dichtigkeit und eine geringe Anzahl von Strukturfehlern aufweist, so dass die Schicht auch eine hohe chemische Beständigkeit aufweist. Dies wird dadurch erreicht, dass basierend auf der Dotierung eine Anzahl von vertikalen Korngrenzen in der Schicht und in Schichtübergängen reduziert ist und/oder eine Anordnung verschiedenartiger Stoffe in unterschiedlichen Schichten, die zu einer abrupten Änderung der Metalloxidstruktur führen, vermieden wird.

Die Störatome der Dotierung können in der Gitterstruktur fixiert und in dem Metalloxid lokal gebunden sein, so dass sie keiner oder lediglich geringer Diffusion innerhalb des Betriebsbereichs unterliegen. Die Störatome sind bspw. nur durch Ätzung freisetzbar, so dass eine sehr hohe chemische und thermische Stabilität erhalten wird. Eine Dotierung kann unaufwändig in einen bestehenden Herstellungsprozess integriert werden.

Gemäß der vorliegenden Erfindung umfasst eine ionensensitive Struktur eine Halbleiterstruktur und einen an der Halbleiterstruktur angeordneten Schichtstapel mit einer dotierten Zwischenschicht, die ein Dotiermaterial und ein Metalloxidmaterial aufweist, das mit dem Dotiermaterial (33) dotiert ist. Die Halbleiterstruktur kann ein Halbleitersubstrat und insbesondere ein prozessiertes Halbleitersubstrat aufweisen, wobei insbesondere derart prozessierte Halbleitersubstrate oder Halbleiterstrukturen genannt werden, die ausgebildet sind, um eine elektrische Eigenschaft basierend auf einem Kontakt der ionensensitiven Struktur mit einem Elektrolyt, das Ionen aufweist, zu verändern. So kann die Halbleiterstruktur ausgebildet sein, um eine elektrische Leitfähigkeit, eine kapazitive Eigenschaft oder eine andere elektrische Eigenschaft basierend auf dem Kontakt der ionensensitiven Struktur mit dem Elektrolyt zu ändern. Der Schichtstapel weist eine Sensorschicht mit einem zweiten Metalloxidmaterial auf, wobei die Zwischenschicht zwischen der Halbleiterstruktur und der Sensorschicht angeordnet ist, und wobei die Sensorschicht ausgebildet ist, um mit dem Elektrolyt kontaktiert zu werden. Ein Anteil des Dotiermaterials in der dotierten Zwischenschicht ist größer oder gleich 0,03 % und kleiner oder gleich 20 %. Vereinfacht ausgedrückt kann basierend auf der veränderten elektrischen Eigenschaft der Kontakt der ionensensitiven Struktur mit dem Elektrolyt bzw. mit den Ionen feststellbar sein, so dass sich die ionensensitive Struktur insbesondere für eine Anordnung in einem hierfür geeigneten Sensor eignet. Hierzu gehören Elektrolyt-Isolator-Sensor-Strukturen (EIS). Die ionensensitive Struktur weist selbst in äußerst aggressiven Medien eine hohe chemische und elektrische Beständigkeit auf.

Mittels der erfindungsgemäßen ionensensitiven Struktur wird eine gegenüber bisher verwendeten Metalloxiden verbesserte Stabilität und Empfindlichkeit hinsichtlich der zu detektierenden Ionen erhalten, wobei ferner eine geringe Querempfindlichkeit und eine minimale Drift bei guter Langzeitstabilität eines Sensors, der die ionensensitive Struktur aufweist, erreicht wird. Dies wird beispielsweise erreicht, da basierend auf der Dotierung des Metalloxidmaterials eine Verminderung von Strukturfehlern in der Schicht erreicht wird, wenn eine Anzahl von Strukturfehlern des Metalloxidmaterials ohne eine Anwesenheit eines Dotierstoffs zum Vergleich herangezogen wird.

Bevorzugte Ausführungsbeispiele der vorliegenden Erfindung werden nachfolgend unter Bezugnahme auf die beiliegenden Zeichnungen näher erläutert. Es zeigen:
- Fig. 1: eine schematische perspektivische Ansicht einer ionensensitiven Struktur gemäß einem Ausführungsbeispiel;
- Fig. 2a: ein schematisches Bereitstellen der Halbleiterstruktur eines Verfahrens zum Herstellen einer ionensensitiven Struktur gemäß einem Ausführungsbeispiel;
- Fig. 2b: ein schematisches Anordnen einer Isolatorschicht an der Halbleiterstruktur gemäß einem Ausführungsbeispiel;
- Fig. 2c: eine schematische Anordnung einer Metalloxidschicht an der Isolatorschicht gemäß einem Ausführungsbeispiel;
- Fig. 2d: eine schematische Ansicht eines Schichtaufbau nach einer erfolgten Temperierung des in Fig. 2c beschriebenen Schichtaufbaus gemäß einem Ausführungsbeispiel;
- Fig. 2e: eine schematische Ansicht des Schichtstapels aus Fig. 2d nach einer Anordnung einer dotierten Zwischenschicht an der temperierten Metalloxidschicht gemäß einem Ausführungsbeispiel;
- Fig. 2f: eine schematische Ansicht des Schichtstapels aus Fig. 2e nach einem Abscheiden einer Sensorschicht gemäß einem Ausführungsbeispiel;
- Fig. 3a: eine schematische Ansicht des Schichtstapel aus Fig. 2d;
- Fig. 3b: eine schematische Ansicht einer Anordnung eines Metalloxidmaterials an der Abstandsschicht gemäß einem Ausführungsbeispiel;
- Fig. 3c: eine schematische Ansicht einer Anordnung einer Schicht mit einem Dotiermaterial an dem Metalloxidmaterial gemäß einem Ausführungsbeispiel;
- Fig. 3d: eine schematische Ansicht eines Übertritts des Dotiermaterials in das Metalloxidmaterial gemäß einem Ausführungsbeispiel;
- Fig. 3e: eine schematische Ansicht einer auf eine Temperierung folgende Entfernung der Schicht mit dem Dotiermaterial gemäß einem Ausführungsbeispiel;
- Fig. 3f: eine schematische Ansicht des Schichtstapel nach einer weiteren Temperierung, nach der die Dotierung ausgeheilt ist, so dass eine dotierte Metalloxidschicht, gemäß einem Ausführungsbeispiel;
- Fig. 4a: eine schematische Ansicht des Schichtstapels aus Fig. 2d;
- Fig. 4b: eine schematische Ansicht einer Anordnung des Dotiermaterials in die Abstandsschicht mittels eines Implantationsprozesses gemäß einem Ausführungsbeispiel;
- Fig. 4c: eine schematische Ansicht den Erhalt der dotierten Zwischenschicht basierend auf den implantierten Metallmaterialien gemäß einem Ausführungsbeispiel;
- Fig. 5a: eine schematische Ansicht des Schichtstapel aus Fig. 2d;
- Fig. 5b: eine schematische Ansicht einer Anordnung einer Schicht mit einem Metallmaterial an der Abstandschicht gemäß einem Ausführungsbeispiel;
- Fig. 5c: eine schematische Ansicht einer Anordnung der Schicht umfassend das Dotiermaterial an der Schicht umfassend das Metallmaterial gemäß einem Ausführungsbeispiel;
- Fig. 5d: eine schematische Ansicht eines Übertritt des Dotiermaterials in die Schicht umfassend das Metallmaterial gemäß einem Ausführungsbeispiel;
- Fig. 5e: eine schematische Ansicht einer die Entfernung der Schicht umfassend das Dotiermaterial gemäß einem Ausführungsbeispiel;
- Fig. 5f: eine schematische Ansicht einer Oxidierung des Metallmaterials der Schicht mit dem Dotiermaterial und dem Metallmaterial gemäß einem Ausführungsbeispiel;
- Fig. 6a: ein schematisches Diagramm mit einem linearen Anstieg der Konzentration des Dotiermaterials entlang der Dicke der dotierten Zwischenschicht gemäß einem Ausführungsbeispiel;
- Fig. 6b: ein schematisches Diagramm mit einem nicht-linearen Verlauf der Konzentration des Dotiermaterials entlang der Dicke gemäß einem Ausführungsbeispiel; und
- Fig. 6c: ein schematisches Diagramm mit einem nicht-monotonen Verlauf der Konzentration des Dotiermaterials entlang der Dicke gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

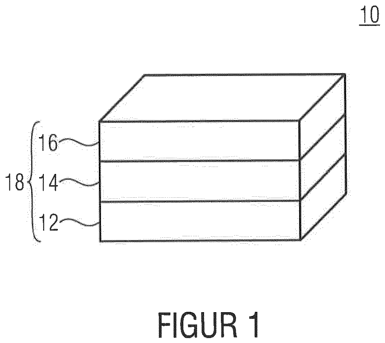

Fig. 1 zeigt eine schematische perspektivische Ansicht einer ionensensitiven Struktur 10 gemäß einem Ausführungsbeispiel. Die ionensensitive Struktur 10 umfasst eine Halbleiterstruktur 12. Bei der Halbleiterstruktur 12 kann es sich beispielsweise um ein prozessiertes Halbleitersubstrat handeln. Bei dem prozessierten Halbleitersubstrat kann es sich beispielsweise um ein für einen Transistor geeignetes Halbleitersubstrat handeln, das npn oder pnp-Strukturen aufweist.

An einer Hauptseite der Halbleiterstruktur 12 ist eine dotierte Zwischenschicht 14 angeordnet. Die dotierte Zwischenschicht 14 umfasst ein Dotiermaterial und ein Metalloxidmaterial, wobei das Metalloxidmaterial bspw. aus einem Metallmaterial und Sauerstoff gebildet ist. Bei dem Metalloxid kann es sich beispielsweise um ein Tantaloxid (Ta₂O₅), Nioboxid (Nb₂O₅), Hafniumoxid (HfO₂), ein anderes Metalloxid oder ein Gemisch daraus handeln. Bei dem Dotiermaterial kann es sich um ein beliebiges Material handeln. Bevorzugt können solche Stoffe, etwa Metallmaterialien, angeordnet werden, die eine niedrigere Außenelektronenzahl aufweisen, als das Metallmaterial der Zwischenschicht 14. Eine Verdichtung der dotierten Zwischenschicht kann zumindest teilweise dadurch erhalten werden, dass ein Metallatom des Dotiermaterials mit weniger Außenelektronen als das Wirtsgittermetallatom (Metallmaterial der Zwischenschicht), z.B. Ta im Ta₂O₅, in einem oxidierten Zustand entsprechend weniger Sauerstoffatome mit einbringt. Dadurch entstehenden Lücken im Wirtsgitter können durch die Differenzen der Elektronegativität zwischen Wirtsatom und Dotieratom (z.B. Ta mit 5 Außenelektronen und Ca mit 2 Außenelektronen) verkleinert werden. Dies ermöglicht eine Verdichtung des Kristallgitters des Metalloxidmaterials basierend auf dem Dotiermaterial. Beispielsweise kann es sich bei dem Dotiermaterial um ein Kalziumoxidmaterial, ein Strontiumoxidmaterial, ein Magnesiumoxidmaterial, ein Kalziumsilikatmaterial, ein Magnesiumsilikatmaterial oder ein Strontiumsilikatmaterial handeln. Alternativ oder zusätzlich kann es sich bei dem Dotiermaterial auch um ein Gemisch von Materialien handeln. Bspw. kann ein Gemisch umfassend ein Kalziumoxidmaterial und ein Strontiumoxidmaterial, ein Gemisch umfassend ein Kalziumoxidmaterial und ein Magnesiumoxidmaterial und/oder ein Gemisch umfassend ein Strontiumoxidmaterial und ein Magnesiumoxidmaterial angeordnet werden. Zusätzlich zu den vorangehend erläuterten Dotiermaterialien können weitere Dotiermaterialien angeordnet sein. Für eine bessere Verständlichkeit werden die vorangehend erläuterten Dotiermaterialien als erste Gruppe von Dotiermaterialien bezeichnet.

Wie es im Zusammenhang mit nachfolgend beschriebenen Ausführungsbeispielen erläutert wird, können darüber hinaus weitere Dotiermaterialien in der Zwischenschicht 14 angeordnet sein. Eine zweite Gruppe von Dotiermaterialien kann beispielsweise ein Hafniumoxidmaterial, ein Zirkoniumoxidmaterial, ein Titanoxidmaterial, ein Hafniumsilikatmaterial, ein Zirkoniumsilikatmaterial oder ein Titansilikatmaterial umfassen. Alternativ oder zusätzlich kann die erste Gruppe ein Gemisch aus einem Hafniumoxidmaterial und einem Zirkoniumoxidmaterial, ein Gemisch aus einem Zirkoniumoxidmaterial und einem Titanoxidmaterial, ein Gemisch aus einem Hafniumoxidmaterial und einem Titanoxidmaterial, ein Gemisch aus einem Hafniumoxidmaterial und einem Zirkoniumsilikatmaterial, ein Gemisch aus einem Zirkoniumsilikatmaterial und einem Titanoxidmaterial und/oder ein Gemisch aus einem Hafniumsilikatmaterial und einem Titanoxidmaterial umfassen. Eine dritte Gruppe von Dotiermaterialien umfasst die dritte Nebengruppe des Periodensystems, beispielsweise Scandium, Ytrium und/oder Lanthan und alternativ oder zusätzlich die Seltenerdmetalle. Als Seltenerdmetalle (seltene Erden) können beispielsweise die Lanthaniden bzw. Lanthanoide verstanden werden. Alternativ oder zusätzlich kann auch ein Gemisch von oben aufgeführten Gemischen und/oder ein Gemisch aus einem oben aufgeführten Material und einem oben aufgeführten Gemisch angeordnet werden.

Ein Anteil des Dotiermaterials oder der Dotiermaterialien in der Zwischenschicht ist größer oder gleich 0,03% (300 ppm) und kleiner oder gleich 20%, oder kann größer oder gleich 1% und kleiner oder gleich 15% oder größer oder gleich 1,5% und kleiner oder gleich 10% betragen. Der Anteil des Dotiermaterials kann sich auf einen Volumenanteil, bevorzugt jedoch einen Massenanteil der Dotiermaterialien in der dotierten Zwischenschicht 14 beziehen. Vereinfacht ausgedrückt kann sich bei zu großer Dotieratomkonzentration das Wirtmetalloxidgitter in ein anderes, ungeeignetes, weniger stabiles Gitter umwandeln.

An einer Hauptseite der Zwischenschicht 14, die der Halbleiterstruktur 12 abgewandt ist, ist eine Sensorschicht 16 angeordnet. Die Zwischenschicht 14 ist zwischen der Sensorschicht 16 und der Halbleiterstruktur 12 angeordnet. Obwohl die Zwischenschicht 14 so dargestellt ist, dass diese direkt mit der Halbleiterstruktur 12 und der Sensorschicht 16 verbunden ist, können zwischen der dotierten Zwischenschicht 14 und der Sensorschicht 16 und/oder zwischen der dotierten Zwischenschicht 14 und der Halbleiterstruktur 12 weitere Schichten angeordnet sein. Die Sensorschicht 16 kann ausgebildet sein, um mit dem Elektrolyt kontaktiert zu werden, beispielsweise wenn die ionensensitive Struktur 10 als ionensensitiver Sensor zum Erfassen oder Sensieren der Ionen in dem Elektrolyt ausgebildet ist. Ein Kontakt der Sensorschicht mit den Ionen kann zu einer Änderung einer elektrischen Eigenschaft der Halbleiterstruktur 12 führen. Ferner kann die Sensorschicht auch als Schutzschicht bezüglich eines darunterliegenden Schichtaufbaus verstanden werden.

Die Sensorschicht 16 kann ein Metalloxidmaterial umfassen oder daraus bestehen. Bei dem Metalloxidmaterial kann es sich um das Tantaloxidmaterial, das Nioboxidmaterial und/oder das Hafniumoxidmaterial handeln. Das Metalloxidmaterial der Sensorschicht 16 kann von dem Metalloxidmaterial der Zwischenschicht 14 verschieden sein. Alternativ können die beiden Metalloxidmaterialien gleich sein. Dies ermöglicht einen einfachen Herstellungsprozess und ein geringes Maß an Gitterfehlstellen zwischen den Schichten, wenn die Moleküle der Metalloxidmaterialien im Wesentlichen gleiche Größen aufweisen.

Die Zwischenschicht 14 und die Sensorschicht 16 können auch als Schichtstapel 18 verstanden werden, wobei der Schichtstapel 18 an der Halbleiterstruktur 12 angeordnet ist.

Die Halbleiterstruktur 12 ist ausgebildet, um eine elektrische Eigenschaft der Halbleiterstruktur 12 basierend auf einem Kontakt der ionensensitiven Struktur 10 mit einem Elektrolyt, das Ionen aufweist, zu verändern. Bei der elektrischen Eigenschaft kann es sich beispielsweise um eine Durchbruchspannung, um einen elektrischen Widerstand, um eine elektrische Kapazität oder dergleichen handeln, die an oder zwischen Strukturen der Halbleiterstruktur 12 angeordnet oder in diese prozessiert ist. Beispielsweise kann es sich um eine elektrische Eigenschaft zwischen einem pn-und/oder einem np-Übergang handeln. Wird beispielsweise die Sensorschicht 16 mit dem Elektrolyt in Kontakt gebracht, so kann dies basierend auf der veränderten elektrischen Eigenschaft an der Halbleiterstruktur 12 erfassbar oder messbar sein.

Die ionensensitive Struktur 10 kann als Elektrolyt-Isolator-Struktur (EIS-)Struktur ausgeführt sein. Hierfür kann beispielsweise zwischen der Halbleiterstruktur 12 und der dotierten Zwischenschicht 14 eine Isolatorschicht angeordnet sein. Die Isolatorschicht kann Bestandteil des Schichtstapels 18 sein.

Die vorangehend beschriebene dotierte Zwischenschicht 14 weist eine hohe Dichtigkeit auf, die insbesondere für chemisch aggressive Umgebungen geeignet ist. Verglichen mit einer Zwischenschicht, die die Dotiermaterialien nicht aufweist, kann ein Strukturgitter der Schicht basierend auf den Dotiermaterialien verdichtet sein. Durch die Verdichtung der Gitterstruktur der Zwischenschicht 14, bzw. des Metalloxidmaterials basierend auf dem Dotiermaterial, ist ein Umfang der Porenbildung, insbesondere der vertikalen Poren, reduziert. Die Bezeichnung vertikale Poren bezieht sich dabei auf eine Ausprägung von Poren durch die Schicht hindurch in eine Richtung angrenzender Schichten und soll nicht einschränkend bezüglich einer Anordnung der Schichten im Raum verstanden werden. Die Reduzierung der vertikalen Poren ermöglicht die Reduzierung oder Verhinderung einer Unterätzung der dotierten Zwischenschicht 14, was zu einer hohen Stabilität und Beständigkeit des Schichtaufbaus führt. Ein weitere Grundlage für die hohe Stabilität und Beständigkeit ist die größere Bindungsfestigkeit zwischen Dotieratom und dem Metalloxid gegenüber den gleichartigen Metalloxidmolekülen. Dies ermöglicht einen zuverlässigen Betrieb der ionensensitiven Struktur in einer (chemisch) aggressiven Umgebung.

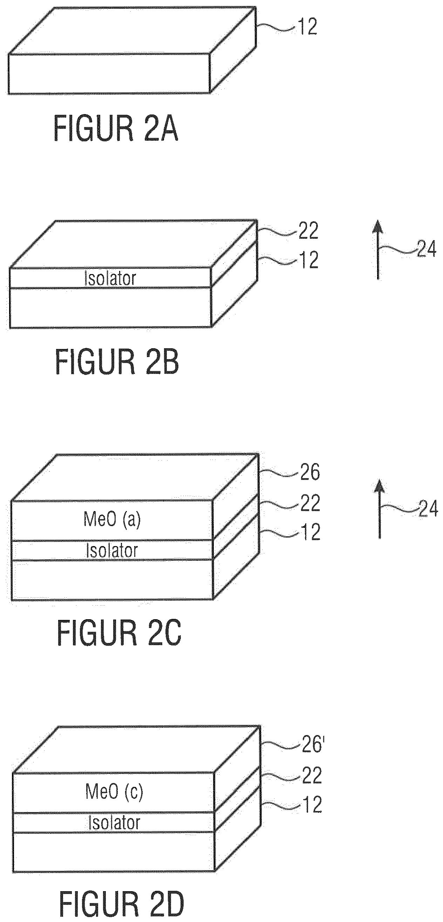

Nachfolgend wird anhand der Fig. 2a-f ein Verfahren zum Herstellen einer ionensensitiven Struktur erläutert. Das Verfahren bezieht sich auf ein Anordnen des Schichtstapels an der Halbleiterstruktur. Das Anordnen des Schichtstapels wird nachfolgend so erläutert, dass mehrere Schichten an der Halbleiterstruktur bzw. einer anderen Schicht angeordnet werden. Die Schichten können durch einen Sputter-Prozess, durch einen Prozess zum Elektronenstrahldampfen, durch einen Prozess umfassend eine Ionenbestrahlung, durch eine chemische Gasphasenabscheidung (Chemical Vapor Deposition - CVD) und/oder durch eine physikalische Gasphasenabscheidung (Physical Vapor Deposition - PVD) angeordnet werden. Die Herstellung oder Anordnung einzelner Schichten kann auch einen Prozess zur thermischen Oxidation eines Materials und/oder einen Ionenimplantationsprozess umfassen. Wie die nachfolgenden Ausführungen zum Herstellungsverfahren zeigen werden, kann die Herstellung der erfindungsgemäßen ionensensitiven Struktur bzw. EIS-Schichtstruktur für einen ionensensitiven Sensor beispielsweise in einem CMOS-Prozess erfolgen.

Fig. 2a zeigt ein Bereitstellen der Halbleiterstruktur 12.

Fig. 2b zeigt ein Anordnen einer Isolatorschicht 22 an der Halbleiterstruktur 12. Die Isolatorschicht 22 kann durch eine thermische Oxidation eines Siliziummaterials angeordnet werden. Das Siliziummaterial kann vor der Oxidation an der Halbleiterstruktur 12 angeordnet werden. Alternativ kann die Halbleiterstruktur 12 das Siliziummaterial bereits umfassen. Umfasst die Halbleiterstruktur 12 beispielsweise Silizium, so kann basierend auf der thermischen Oxidation ein Silizium(di)oxidmaterial (SiO₂) erhalten werden. Wie im Zusammenhang mit Fig. 1 ausgeführt, kann also der Schichtstapel, der an der Halbleiterstruktur 12 angeordnet ist, die Isolatorschicht 22 aufweisen. Entlang einer Dickenrichtung 24, die parallel zu einer Oberflächennormalen der Halbleiterstruktur 12 im Raum angeordnet ist, kann die Isolatorschicht 22 eine Ausdehnung aufweisen, die größer oder gleich 2 nm und kleiner oder gleich 200 nm, größer oder gleich 2,5 nm und kleiner oder gleich 150 nm oder größer oder gleich 10 nm und kleiner oder gleich 90 nm. Eine derartige minimale Ausdehnung der Isolatorschicht kann zumindest teilweise verhindern, dass ein Dotiermaterial aus der dotierten Zwischenschicht an die Halbleiterstruktur 12 gelangt.

Eine Ausdehnung einer oder mehrerer Schichten entlang der Dickenrichtung 24 wird nachfolgend als Dicke der jeweiligen Schicht bezeichnet, wobei die Verwendung des Begriffs "Dicke" keinerlei einschränkende Wirkung entfalten soll. Es versteht sich, dass basierend auf einer beliebigen Anordnung der Struktur im Raum beliebige andere Bezeichnungen (wie beispielsweise Länge, Höhe oder Breite) verwendet werden können, um die Ausdehnung der jeweiligen Schicht zu bezeichnen.

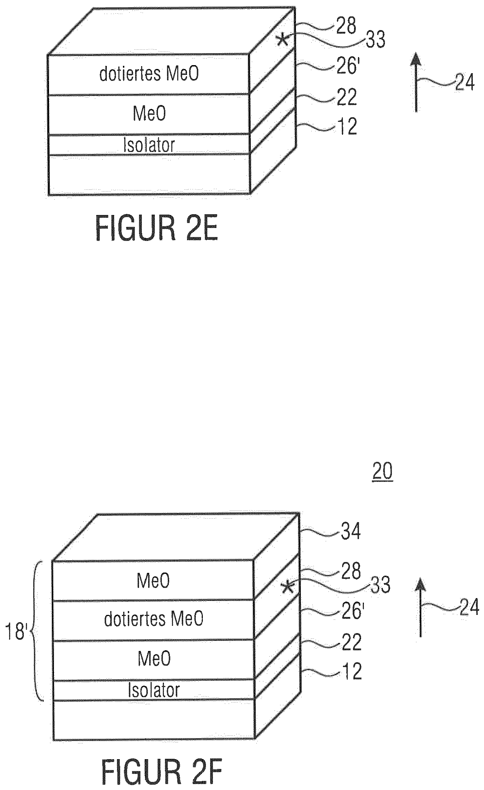

Fig. 2c zeigt schematisch eine Anordnung einer Metalloxidschicht (Metall-Me; Oxid-O; MeO) 26 an der Isolatorschicht 22. Die Metalloxidschicht 26 kann eine amorphe oder polykristalline Struktur aufweisen, wie es durch die Bezeichnung (a) angedeutet ist. Die Metalloxidschicht 26 weist eine Schichtdicke entlang der Dickenrichtung 24 auf, die größer oder gleich 1 nm und kleiner oder gleich 1000 nm, größer oder gleich 5 nm und kleiner oder gleich 500 nm oder größer oder gleich 12 nm und kleiner oder gleich 200 nm beträgt. Die Metalloxidschicht 26 wird nachfolgend als Abstandsschicht bezeichnet, da eine der strukturellen Aufgaben der Metalloxidschicht 26 darin verstanden werden kann, einen Abstand zwischen dem weiteren Schichtaufbau und der Isolatorschicht 22 bzw. der Halbleiterstruktur 12 bereitzustellen. Insbesondere kann die Abscheidung der Abstandsschicht 26 so erfolgen, dass die Isolatorschicht 22 durch die Metalloxidabscheidung chemisch nicht beeinflusst wird. Vereinfacht ausgedrückt zeigt Fig. 2 ein Abscheiden einer amorphen Metalloxidschicht mit einer minimalen Schichtdicke.

Fig. 2d zeigt den Schichtaufbau schematisch nach einer erfolgten Temperierung des in Fig. 2c beschriebenen Schichtaufbaus. Die Temperierung kann so ausgeführt werden , dass eine Kristallisation des Metalloxidmaterials der Abstandsschicht 26 stattfindet und so dass basierend darauf eine Abstandsschicht 26' erhalten wird. Die Abstandschicht 26' weist zumindest teilweise ein kristallines Metalloxidmaterial auf, wie es durch die Bezeichnung (c) angedeutet ist. Die Abstandsschicht 26' kann ganz oder teilweise aus kristallinem Material gebildet sein. Ist die Abstandsschicht 26' teilweise aus kristallinem Material gebildet (also während der Temperierung nicht vollständig kristallisiert), so kann die Abstandsschicht 26' einen Übergang von der amorphen oder polykristallinen Struktur hin zu der teilweise erhaltenen (mono-)kristallinen Struktur aufweisen. Die amorphe oder polykristalline Strukturseite der Abstandsschicht 26' ist beispielsweise der Halbleiterstruktur 12 zugewandt angeordnet. Die kristalline Strukturseite ist der Halbleiterstruktur 12 abgewandt angeordnet.

Vorteilhaft an der kristallinen Struktur der Abstandsschicht 26' ist, dass ein Diffundieren von nachfolgend an oder in der Abstandsschicht 26' angeordnete Dotiermaterialien während einer Temperierung zur Fixierung (Ausheilung) der Dotiermaterialien eingeschränkt oder verhindert ist. So kann ein Abstand von dotierten Bereichen der Abstandsschicht, die eine dotierte Zwischenschicht bilden, oder einer anderen dotierten Zwischenschicht zumindest einen minimalen Wert aufweisen, der weiter unten erläutert ist.

Fig. 2e zeigt schematisch eine Anordnung bzw. ein Erhalten einer dotierten Zwischenschicht 28 an der Abstandsschicht 26. Die dotierte Zwischenschicht 28 umfasst ein Metalloxidmaterial und ein Dotiermaterial 33. Wie es nachfolgend erläutert wird, kann die dotierte Zwischenschicht 28 bspw. erhalten werden indem eine Metalloxidschicht an der Abstandsschicht 26 angeordnet und dotiert wird. Alternativ kann auch eine Anordnung des oder der Dotiermaterialien in die Abstandsschicht 26 erfolgen, etwa mittels Implantation. Die Implantation kann so ausgeführt werden, dass das Dotiermaterial lediglich in einen bestimmten Bereich oder eine bestimmte Tiefe entgegengesetzt zur Dickenrichtung 24 in die Abstandsschicht 26 eindringt. Basierend auf einer Ausheilung der Abstandsschicht 26, die das oder die die implantierte(n) Dotiermaterial(ien) aufweist kann aus der Abstandsschicht 26 die dotierte Zwischenschicht 28 erhalten werden. Eine Dicke (Ausmaß entlang der Dickenrichtung 24) der dotierten Zwischenschicht kann bspw. auf einer Eindringtiefe der Dotiermatierialien bei der Implantation basieren.

Fig. 2f zeigt ein Abscheiden einer Sensorschicht 34 an der dotierten Zwischenschicht 28. Die Sensorschicht 34 kann ein Metalloxidmaterial aufweisen, das basierend auf dem Abscheiden eines Metalloxidmaterials oder basierend auf dem Abscheiden und nachfolgendem Oxidieren eines Metallmaterials erhalten werden kann. Die Sensorschicht 34 kann eine Dicke entlang der Dickenrichtung 24 von einem Angström (0,1 nm) oder mehr und weniger oder gleich 150 nm aufweisen. Alternativ kann die Sensorschicht 34 auch eine Schichtdicke von weniger oder gleich 70 nm, bevorzugt von weniger oder gleich 40 nm aufweisen. Bei der Sensorschicht 34 kann es sich bspw. um die Sensorschicht 16 handeln.

Eine ionensensitive Struktur 20 umfassend die Halbleiterstruktur 12 und einen Schichtstapel 18' kann als Elektrolyt-Isolator-Struktur ausgeführt sein. Die Elektrolyt-Isolator-Struktur kann als ionensensitiver Feldeffekt-Transistor, als ionensensitiver Sensor oder als mit Licht angesteuerter Sensor (LAPS) ausgeführt sein.

Ein (erstes) Metallmaterial der Zwischenschicht 28 und ein (zweites) Metallmaterial der Sensorschicht 34 können voneinander verschieden sein. Alternativ kann das erste Metallmaterial und das zweite Metallmaterial gleich sein. Das kann dazu führen, dass auch die Metalloxidmaterialien gleich sind. Ein (drittes) Metallmaterial der Abstandsschicht 26' kann gleich sein, wie das erste und/oder zweite Metallmaterial, so dass die Abstandsschicht 26' das gleiche Metalloxidmaterial wie die Zwischenschicht 28 und/oder die Sensorschicht 34 aufweisen kann. In anderen Worten ermöglichen vorangehend beschriebene Ausführungsbeispiele, dass basierend auf gleichen Metalloxidmaterialien und/oder einer Dotierung einer chemisch relativ stabilen Schicht, beispielsweise oder vorzugsweise Ta₂O₅, eine abrupte Änderung der Metalloxidstruktur vermieden werden kann, wie sie erhalten wird, wenn unterschiedliche Stoffe, etwa Ta₂O₅ und HfO₂ angeordnet werden.

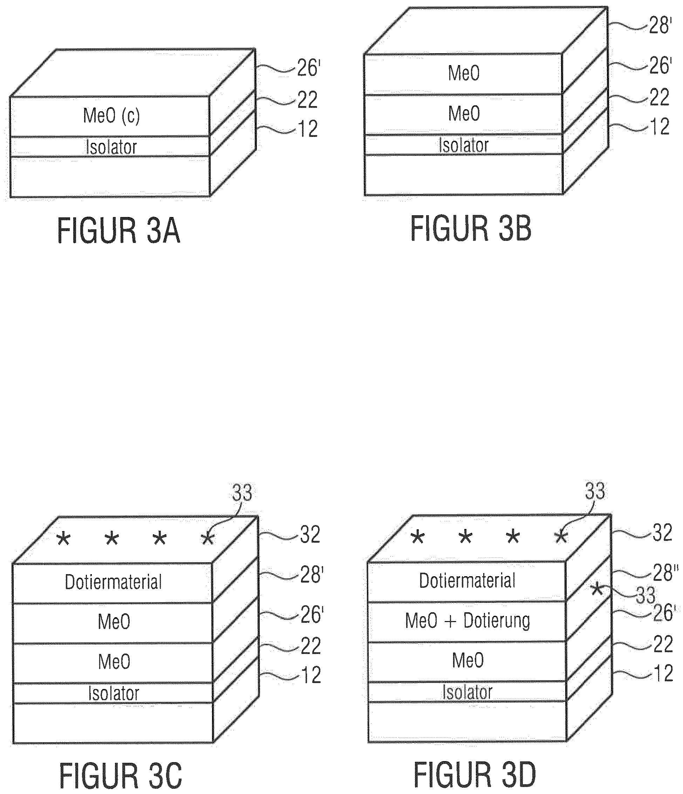

Nachfolgend wird anhand von Figuren 3a-f ein Ausführungsbeispiel beschrieben, das den Erhalt der dotierten Zwischenschicht 14 oder 28 ermöglicht.

Fig. 3a zeigt schematisch den Schichtstapel umfassend die Halbleiterstruktur 12, die Isolatorschicht 22 und die Abstandsschicht 26', wie es im Zusammenhang mit Fig. 2d beschrieben ist.

Fig. 3b zeigt schematisch eine Anordnung eines Metalloxidmaterials an der Abstandsschicht 26', so dass eine Metalloxidschicht 28' erhalten wird. Bei dem Metall der Metalloxidschicht 28' kann es sich um ein Metall oder Halbmetall, beispielsweise um Tantal, Hafnium oder Niob handeln.

In anderen Worten wird nach einer in Fig. 2d dargestellten Temperung, bei der die Kristallisation des Metalloxids (etwa Ta₂O₅) stattfinden kann, in Fig. 2e ein Metalloxidmaterial, beispielsweise ein Tantaloxid abgeschieden.

Fig. 3c zeigt schematisch eine Anordnung einer Schicht 32 (Spenderschicht) an der Metalloxidschicht 28. Die Schicht 32 umfasst das zumindest eine Dotiermaterial 33. Hierbei kann es sich um eine oder mehrere der im Zusammenhang mit Fig. 1 erläuterten Gruppen von Dotiermaterialien handeln.

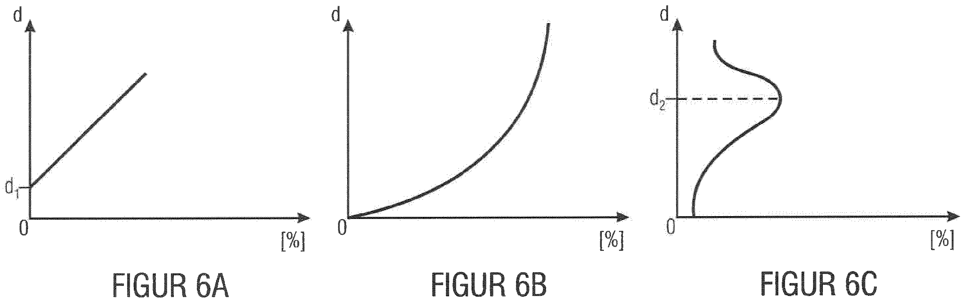

Fig. 3d zeigt schematisch einen Übertritt des Dotiermaterials 33 in die Metalloxidschicht 28', so dass eine modifizierte Metalloxidschicht 28" erhalten werden kann, die das Dotiermaterial 33 umfasst. Dies kann beispielsweise mittels eines Erhitzens (Temperung) erfolgen, die ein Eindiffundieren des Dotiermaterials 33 in die Metalloxidschicht 28' ermöglicht. Eine Menge des Dotiermaterials 33 und/oder ein Verlauf eines im Zusammenhang mit den Fig. 6a-c beschriebenen Dotierungsprofils kann basierend auf einem Temperaturverlauf der Temperierung beeinflusst oder gesteuert werden.

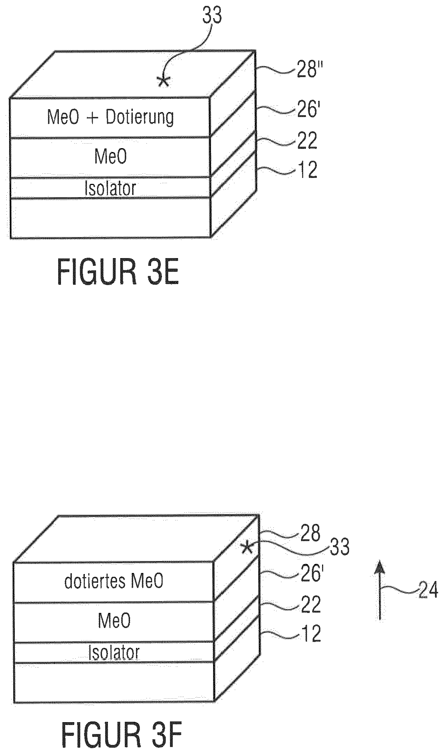

Fig. 3e zeigt schematisch eine auf die im Zusammenhang mit der Fig. 3d beschriebenen Temperierung folgende Entfernung der Schicht 32 von dem Schichtstapel.

Fig. 3f zeigt schematisch den Schichtstapel nach einer weiteren Temperierung, nach der die Dotierung der Schicht 28" aus Fig. 3e ausgeheilt ist, so dass die dotierte Metalloxidschicht 28 erhalten wird, in welcher das Dotiermaterial 33 zumindest teilweise fixiert ist. Die Fixierung kann durch ein Einbinden des Dotiermaterials 33 in das Kristallgitter des Metalloxidmaterials bewirkt werden. Bspw. kann basierend auf der Temperierung eine Rekristallisation des Metalloxidmaterials unter Einbindung (Fixierung) des Dotiermaterials 33 stattfinden. Die Abstandsschicht 26' ist zwischen der Halbleiterstruktur 12 und der dotierten Zwischenschicht 28 angeordnet.

Die in den Fig. 3c-3f dargestellten Schritte können wiederholt ausgeführt werden, beispielsweise um mehrere Dotierstoffe in die Metalloxidschicht 28' eindiffundieren zu lassen. Die im Zusammenhang mit Fig. 1 beschriebenen zusätzlichen Dotierstoffe der Gruppe 2 und/oder der Gruppe 3 können beispielsweise vor dem Anordnen der Dotierstoffe der Gruppe 1 erfolgen. Vereinfacht ausgedrückt kann eine Anordnung der Dotiermaterialien der Gruppe 2 und/oder der Gruppe 3 vor oder nach einer Anordnung der Dotiermaterialien der Gruppe 1 erfolgen.

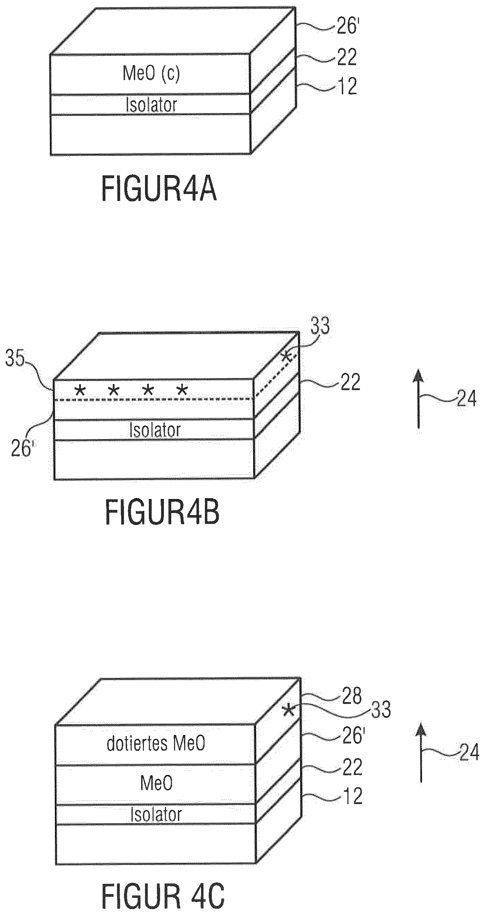

Nachfolgend wird anhand von Figuren 4a-c ein alternatives Ausführungsbeispiel beschrieben, das den Erhalt der dotierten Zwischenschicht 14 oder 28 ermöglicht.

Fig. 4a zeigt schematisch den Schichtstapel umfassend die Halbleiterstruktur 12, die Isolatorschicht 22 und die Abstandsschicht 26', wie es im Zusammenhang mit Fig. 2d beschrieben ist.

Fig. 4b zeigt schematisch eine Anordnung des Dotiermaterials 33 in die Abstandsschicht 26' mittels eines Implantationsprozesses. Mittels des Implantationsprozesses werden bspw. Metallmaterialien des jeweiligen Dotiermaterials 33 in die Abstandsschicht 26' angeordnet. Bei dem Metallmaterial kann es sich bspw. um Hafnium, Zirkonium, Tantal, Kalzium, Magnesium, Strontium und/oder Ionen hiervon handeln. Die Implantation kann so ausgeführt werden, dass die Metallmaterialien lediglich in einen Tiefenbereich 35 entgegengesetzt der Dickenrichtung 24 vordringen, der einen minimalen Abstand der Abstandsschicht 26', in dem eine geringe Zahl oder keine der Dotiermaterialien angeordnet sind, beibehält.

Fig. 4c zeigt schematisch den Erhalt der dotierten Zwischenschicht 28 basierend auf den implantierten Metallmaterialien. Die dotierte Zwischenschicht kann unter Zufuhr von Sauerstoff und ggf. unter Temperierung der in Fig. 4b beschriebenen Abstandsschicht 26' erhalten werden. Die Temperierung unter Sauerstoffzufuhr ermöglicht eine Oxidation und Ausheilung, so dass Material in dem Bereich rekristallisiert. Metallmaterialien können oxidieren, so dass eine Rekristallisation des dotierten Metalloxidmaterials erhalten wird. Dies ermöglicht den Erhalt einer einstückig mit der Abstandsschicht 26' gebildeten Zwischenschicht 28..

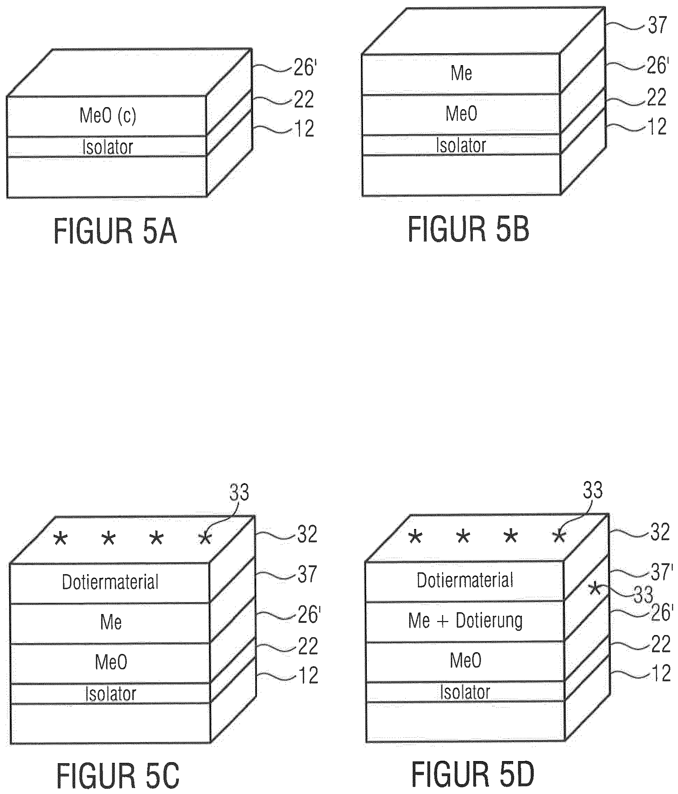

Nachfolgend wird anhand von Figuren 5a-f ein alternatives Ausführungsbeispiel beschrieben, das den Erhalt der dotierten Zwischenschicht 14 oder 28 ermöglicht.

Fig. 5a zeigt schematisch den Schichtstapel umfassend die Halbleiterstruktur 12, die Isolatorschicht 22 und die Abstandsschicht 26', wie es im Zusammenhang mit Fig. 2d beschrieben ist.

Fig. 5b zeigt schematisch eine Anordnung einer Schicht 37 an der Abstandsschicht 26'. Die Schicht 37 umfasst das Metallmaterial der dotierten Zwischenschicht 28, wobei das Metallmaterial in einem unoxidierten Zustand vorliegen kann.

Fig. 5c zeigt schematisch eine Anordnung der Schicht 32 umfassend das Dotiermaterial 33 an der Schicht 37. Vereinfacht ausgedrückt kann die Schicht 32 anstelle an der Schicht 28', wie es im Zusammenhang mit der Figur 3c beschrieben ist, an der Schicht 37 angeordnet werden.

Fig. 5d zeigt schematisch einen Übertritt des Dotiermaterials 33 in die Schicht 37, wie es im Zusammenhang mit der Figur 3d beschrieben ist. Basierend auf dem Übertritt des Dotiermaterials 33 in die Schicht 37 kann die Schicht 37' erhalten werden, die das Metallmaterial und das Dotiermaterial 33 aufweist.

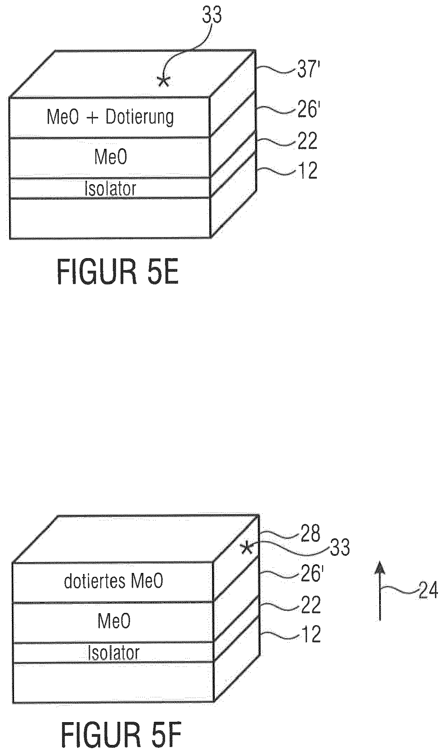

Fig. 5e zeigt schematisch die Entfernung der Schicht 32, wie es im Zusammenhang mit der Fig. 3e beschrieben ist.

Fig. 5f zeigt schematisch eine Oxidierung des Metallmaterials der Schicht 37' und des Dotiermaterials. Dies kann bspw. unter Zufuhr von Temperatur und/oder Sauerstoff erfolgen, so dass eine gleichzeitige Oxidation des Metallmaterials und des Dotiermaterials in der dotierten Zwischenschicht 28 erhalten wird. Vereinfacht ausgedrückt kann die dotierte Zwischenschicht 28 auch erhalten werden, indem die im Zusammenhang mit Fig. 3b beschriebene Abscheidung der Metalloxidschicht 28' so erfolgt, dass das abgeschiedene Material ein Dotiermaterial oder mehrere Dotiermaterialien bereits zumindest teilweise aufweist.

Bei der Schicht 28 kann es sich beispielsweise um die Zwischenschicht 14 handeln. Die Zwischenschicht 28 und/oder die Zwischenschicht 14 kann eine Schichtdicke entlang der Dickenrichtung 24 von zumindest 1 nm und höchstens 200 nm (bspw. von zumindest 1 nm und höchstens 50 nm), von zumindest 3 nm und höchstens 150 nm oder von zumindest 5 nm und höchstens 100 nm aufweisen.

Alternativ kann die dotierte Zwischenschicht 28 auch erhalten werden, indem an der Abstandsschicht 26' eine dotierte Metallmaterialschicht angeordnet wird. Die dotierte Metallmaterialschicht kann darauf folgend oxidiert werden, etwa thermisch, so dass die dotierte Metalloxidmaterialschicht (Zwischenschicht) 28 erhalten wird.

Die Abstandsschicht 26' kann ein Eintreten des Dotiermaterials oder der Dotiermaterialien in die Isolatorschicht 22 während des vorangehend beschriebenen Herstellungsprozesses reduzieren oder verhindern. Wird die dotierte Zwischenschicht 28 mittels Implantation von Metallen in die Abstandsschicht 26' erhalten, ist eine Implantationstiefe vorteilhaft, die die Dicke der Abstandsschicht 26' nicht überschreitet, so dass die Metallmaterialien von der Isolatorschicht 22 auf Abstand gehalten (beabstandet) sind.

Ein Schichtstapel 18' kann somit die Isolatorschicht 22, die Abstandsschicht 26', die dotierte Zwischenschicht 28 und die Sensorschicht 34 umfassen. Alternativ kann, wie vorangehend beschrieben, der Schichtstapel 18' so ausgeführt sein, dass die dotierte Zwischenschicht 28 einstückig mit der Abstandsschicht 26' gebildet ist.

Ein Erhalt der dotierten Zwischenschicht kann auch basierend auf einer Kombination von in den Fig. 3a-f, Fig. 4a-c und/oder Fig. 5a-f beschriebenen Schritten erfolgen.

Die FIG 6a-c zeigen schematische Diagramme mit Verläufen einer Konzentration des Dotiermaterials bzw. dessen Anteils in der dotierten Zwischenschicht 28 oder 14 entlang einer Dicke d, die entlang der Dickenrichtung 24 der Fig. 2a-f verlaufen kann. Die Dicke d ist an der Ordinate der Diagramme angezeichnet. An der Abszisse der Graphen ist ein prozentualer Anteil des Dotiermaterials in der dotierten Zwischenschicht eingetragen.

Fig. 6a zeigt einen schematischen linearen Anstieg der Konzentration des Dotiermaterials entlang der Dicke d in der dotierten Zwischenschicht. Ist die dotierte Zwischenschicht einstückig mit der Abstandsschicht gebildet, so kann sich der Verlauf der Konzentration auch auf die Abstandschicht beziehen. In einem Dickenbereich von 0 ausgehend bis zu einer Dicke d₁ ist der Gehalt des Dotiermaterials beispielsweise 0 oder in etwa 0. Die Konzentration des Dotiermaterials beginnt mit einer zunehmenden Dicke von der Dicke d₁ an zu steigen. Das bedeutet, dass beispielsweise benachbart zu der Abstandsschicht 26' der Fig. 2f kein Dotiermaterial oder lediglich ein geringer Anteil enthalten sein kann. Alternativ kann bereits bei einer Dicke d=0 ein Anteil des Dotiermaterials von größer 0 enthalten sein, was einen Hinweis darauf liefern kann, dass während der Herstellung der dotierten Zwischenschicht ein Anteil des Dotiermaterials in die Abstandsschicht diffundiert ist.

Fig. 6b zeigt einen schematischen nicht-linearen Verlauf der Konzentration des Anteils des Dotiermaterials entlang der Dicke d. Bei einer Dicke d=0 ist ein Anteil des Dotiermaterials beispielsweise ebenfalls 0. Vereinfacht ausgedrückt kann ein Anteil (Konzentration) des Dotiermaterials in der Zwischenschicht von der Halbleiterstruktur abgewandten Seite der Zwischenschicht ausgehend in eine Richtung hin zu der Halbleiterstruktur abnehmen.

Fig. 6c zeigt ein schematisches Diagramm mit einem nicht-monotonen Verlauf der Konzentration des Anteils des Dotiermaterials entlang der Dicke d. Von einer Dicke d=0 ausgehend (beispielsweise benachbart zur Abstandsschicht) nimmt der Anteil des Dotiermaterials zu, um bei einer Dicke d₂ ein Maximum aufzuweisen und mit zunehmender Dicke d wieder abzufallen.

Prinzipiell können beliebige Verläufe der Konzentration des Dotiermaterials in der dotierten Zwischenschicht erhalten werden. Durch eine sequentielle Anordnung von unterschiedlichen Dotiermaterialien oder Schichten, die das Dotiermaterial aufweisen und/oder unterschiedlichen Temperierungen kann ein Diffundieren des Dotiermaterials in das Metalloxidmaterial und durch dieses hindurch beeinflusst werden. Bei einer sequentiellen Bereitstellung von Dotiermaterialien und/oder basierend auf unterschiedlichen Molekülgrößen des Dotiermaterials kann eine Diffusion einzelner Dotiermaterialien ebenfalls beeinflusst werden.

Eine Anwendung der vorangehend beschriebenen ionensensitiven Strukturen ist beispielsweise die pH-Messtechnik. Vorangehend beschriebene Ausführungsbeispiele ermöglichen eine schnelle Prüfung des Oberflächenzustands in situ.

Durch Dotierung und Temperung kann ein Dotierungsprofil mit steigender und/oder abfallender Konzentration des Dotierstoffes (Dotiermaterials) eingestellt werden. Eine bessere Strukturanpassung und eine Verminderung von Strukturfehlern in der Schicht (Zwischenschicht) können eine Folge sein. Durch eine Dotierung mit stark polarisierenden und lediglich bei hohen Temperaturen beweglichen Metallatomen, wie insbesondere Kalzium (Ca), kann eine Metalloxidstruktur strukturell dichter hergestellt werden und mit Lewis-Amphoteren Metalloxiden, wie etwa HfO₂ eine starke Polarisation des Gitters wieder entspannt werden. Nach der Schichtherstellung kann eine Temperung die Dotierungskonzentration und das Dotierprofil einstellen.

Vorangehend beschriebene Ausführungsbeispiele ermöglichen ferner, dass der Stoff nicht verlassen werden muss. Das bedeutet, das eigentliche Wirtsgitter des Metalloxides (z.B. Ta2O5), kann abgeschieden und getempert werden, so dass bei der gleichen Temperatur immer die gleiche Gitterstruktur vom gleichen Kristalltyp erhalten werden kann. Diese kann unverändert bleiben, solange die Dotandenkonzentration eine kritische Größe nicht überschreitet. Dies ermöglicht die Vermeidung von gegebenenfalls schweren Strukturstörungen. Für sensorische Anwendungen der entsprechenden Vorrichtung kann eine hohe oder gar höchste Unempfindlichkeit gegenüber Fremdionen erhalten werden oder bleiben. Einmal fixierte Störatome (Dotiermaterialien), wie etwa Kalzium sind lokal gebunden und unterliegen im Betrieb keiner weiteren Diffusion, sofern die Betriebsbedingungen entsprechende Temperaturen, wie beispielsweise 150°, nicht überschreiten. Die eingebrachten Störatome sind in einem derartigen Fall lediglich durch eine Ätzung freisetzbar. Beispielsweise sind Kalzium-Tantalate (dotierte Zwischenschicht umfassend ein Tantaloxid und Kalziumdotiermaterialien) sowie Derivate außerordentlich chemisch und thermisch stabil, wie es beispielsweise in [17] und [18] beschrieben ist.

In anderen Worten: Unterschreitet die Schichtdicke der Isolatorschicht 22 eine minimale Schichtdicke, kann ein später angeordnetes Dotiermaterial beim Anwenden hoher Temperaturen während des Ausheilens in die Grenzflächenschicht des amorphen Isolatormaterial (SiO₂) zum Halbleitersubstrat (Si) eindiffundieren und gegebenenfalls die Flachbandspannung einer EIS-Struktur sowie das Isolationsverhalten ungewollt verschieben. Nach einer Abscheidung des Dotiermaterials kann diese Schicht nach einer weiteren Temperung, wo dieser Dotierstoff in das Metalloxid (Ta₂O₅) eindiffundiert ist, entfernt und eine weitere Temperung kann ausgeführt werden, um die Dotierung auszuheilen und zu fixieren. Anschließend kann eine weitere Schicht umfassend Metalloxid abgeschieden oder ein weiteres Metall abgeschieden und thermisch oxidiert werden. Eine weitere Temperung kann die Dotierprofile nochmal ändern. Bevorzugt unterschreitet die letzte Schicht (Sensorschicht) eine bestimmte Dicke nicht. Die Dicke kann entsprechend dem oberen Dotierprofil (Dotierprofil der dotierten Zwischenschicht benachbart zur Sensorschicht) abhängig vom Metalloxid sein, damit nicht unnötig viel Dotierstoff an die Schutzschichtoberfläche dringt und eine, wenn genutzte, Sensorsensibilität und Fremdionensensibilität ungünstig verändert wird.

Durch die erfindungsgemäße Vorgehensweise zur Herstellung einer ionensensitiven Schichtstruktur für einen ionensensitiven Sensor, wie z.B. einen ISFET, einen kapazitiv auslesbaren EIS-Sensor oder einen LAPS-Sensor, kann insbesondere die Lebensdauer in chemisch aggressiven Medien, wie z.B. bei einem CIP-Vorgang (CIP =cleaning in place) auch bei relativ hohen Temperaturen deutlich erhöht werden. So kann bei einem entsprechend ausgebildeten ionensensitiven Sensor, wie z.B. einem ISFET die Arbeitspunktdrift oder auch die Flachbandspannung unter thermischen Sterilisationsbedingungen mit Heißwasserdampf, wie z.B. bei einem SIP-Vorgang (SIP = sterilization in place), z.B. bei Temperaturen von bis zu 135°C deutlich gegenüber herkömmlich ausgestalteten ionensensitiven Sensoren verringert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur

[1] Bergveld, Development of an ion-sensitive solid-state device for neurophysiological measurements, IEEE Trans. Biomed. Eng. BME-17 (1970), S. 70.
[2] "Chemical Sensitivity of an ISFET with Ta2O5 membrane in strong acid and alkaline solutions", P.V. Bobrov, et al., Leningrad State University USSR, Sensors and Actuators B 3 (1991) 75-81.
[3] "The pH-sensing properties of tantalum pentoxide films fabricated by metal organic low pressure chemical vapor deposition", T. Mikolajick, et al., Fraunhofer Institute integrated Circuits Erlangen Germany, Sensors and Actuators B 44 (1997) 262-267.
[4] Sensitivity and hysteresis effect in Al2O3 gate ph-ISFET, Jung-Chuan Chou et al., National Yunlin University Taiwan, Materials Chemistry and Physics 71 (2001) 120-4.
[5] "Study of TiO2 thin films for Ion Sensitive Field Effect Transistor Application with RF sputtering deposition", Jung Chuan Chou, Lan Pin Liao, National Yunlin University of Science & Technology, Taiwan, Japanese Journal of Applied Physics 43, 1, 2004 S. 61-65.
[6] "Development of a wide range pH sensor based on Elektrolyt-Insulator-Semiconductor structure with corrosion-resistant Al2O3-Ta2O5 and Al2O3-ZrO2 double-oxide thin films", Shoji Yoshida, et al., Tohoku University Sendai Japan, J. Electrochem. Soc. 151(3)H53-H58 (2004).
[7] "pH sensitivity improvement on 8 nm thick Hafnium oxide by post deposition annelaing", Chao-Sung Lai et al., Chang Gung University Tao-Yuan Taiwan, Electrochemical and Solid-State Letters 9(3) G90-2 (2006).
[8] P.D. van der Wal et al., Proceedings of IEEE Sensors (2004)677.
[9] H. Voigt et al., Sensors & Actuators 44(1997)1-3, 441.
[10] US-Patent 5,288,563
[11] Internationales Patent WO2005/073706
[12] P. Gimmel et al., Sensors & Actuators 4(1991)1-2, 135
[13] Hafeman et al., Science 240(1988)1182
[14] H. Grüger et al., Thin Film Solids 447-448(2004)509
[15] US Patent 7,321,143
[16] US Patent 8,461,587 B2 Multilayer
[17] H. Remy, Lehrbuch der anorganischen Chemie, Band II, 12. Auflage, Leipzig 1973, Akad.Verlagsges. Geest & Portig/18/R.C.Roop, Encyclopedia of the alkaline earth compounds, Elsevier 2013, S. 772.

## Patentansprüche

1. Ionensensitive Struktur (10; 20) mit:
einer Halbleiterstruktur (12); und
einem an der Halbleiterstruktur angeordneten Schichtstapel (18; 18') mit einer dotierten Zwischenschicht (14; 28), die ein Dotiermaterial (33) und ein erstes Metalloxidmaterial aufweist, das mit dem Dotiermaterial (33) dotiert ist,
wobei die Halbleiterstruktur (12) ausgebildet ist, um eine elektrische Eigenschaft basierend auf einem Kontakt der ionensensitiven Struktur (10; 20) mit einem Elektrolyt, das Ionen aufweist, zu verändern;
wobei der Schichtstapel (18; 18') eine Sensorschicht (16; 34) mit einem zweiten Metalloxidmaterial aufweist, wobei die Zwischenschicht (14; 28) zwischen der Halbleiterstruktur (12) und der Sensorschicht (16; 34) angeordnet ist, und wobei die Sensorschicht (16; 34) ausgebildet ist, um mit dem Elektrolyt kontaktiert zu werden;
wobei ein Anteil des Dotiermaterials in der dotierten Zwischenschicht größer oder gleich 0,03 % ist und kleiner oder gleich 20 % ist.

2. lonensensitive Struktur gemäß Anspruch 1, bei der der Anteil des Dotiermaterials in der dotierten Zwischenschicht größer oder gleich 1 % und kleiner oder gleich 15 % ist.

3. lonensensitive Struktur gemäß Anspruch 1 oder 2, wobei der Schichtstapel (18') eine Isolatorschicht (22) aufweist, die zwischen der Halbleiterstruktur (12) und der Zwischenschicht (28) angeordnet ist.

4. lonensensitive Struktur gemäß einem der vorangehenden Ansprüche, wobei die ionensensitive Struktur (10; 20) als ionensensitiver Sensor ausgebildet ist.

5. lonensensitive Struktur gemäß einem der vorangehenden Ansprüche, bei der ein Anteil des Dotiermaterials (33) in der Zwischenschicht (14; 28) von einer der Halbleiterstruktur (12) abgewandten Seite der Zwischenschicht (14; 28) ausgehend in eine Richtung hin zu der Halbleiterstruktur (12) abnimmt.

6. Ionensensitive Struktur gemäß einem der vorangehenden Ansprüche, bei der die Zwischenschicht (14; 28) einen Übergang von einer amorphen (a) oder polykristallinen Strukturseite hin zu einer kristallinen (c) Strukturseite aufweist, wobei die amorphe (a) oder polykristalline Strukturseite der Halbleiterstruktur (12) zugewandt und die kristalline (c) Strukturseite der Halbleiterstruktur (12) abgewandt angeordnet ist.

7. lonensensitive Struktur gemäß einem der vorangehenden Ansprüche, bei der die elektrische Eigenschaft an oder zwischen Strukturen der Halbleiterstruktur (12) ausgebildet oder in diese prozessiert ist und eine Durchbruchspannung, ein elektrischer Widerstand oder eine elektrische Kapazität ist.

8. Elektrolyt-Isolator-Struktur mit einer ionensensitiven Struktur (10; 20) gemäß einem der vorangehenden Ansprüche.

9. Elektrolyt-Isolator-Struktur gemäß Anspruch 8, die als ionensensitiver Feldeffekt-Transistor, als ionensensitiver Sensor oder als mit Licht angesteuerter Sensor ausgeführt ist.

10. Verfahren zum Herstellen einer lonensensitiven Struktur mit folgenden Schritten:
Bereitstellen einer Halbleiterstruktur (12); und
Anordnen eines Schichtstapels (18; 18') mit einer dotierten Zwischenschicht (14; 28) an der Halbleiterstruktur (12);
wobei das Anordnen des Schichtstapels (18; 18') einen Schritt des Herstellens der Zwischenschicht (14; 28) aufweist, so dass ein erstes Metalloxidmaterial mit einem Dotiermaterial (33) dotiert wird, so dass ein Anteil des Dotiermaterials in der dotierten Zwischenschicht größer oder gleich 0,03 % ist und kleiner oder gleich 20 % ist;
so dass die Halbleiterstruktur (12) ausgebildet ist, um eine elektrische Eigenschaft basierend auf einem Kontakt der ionensensitiven Struktur (10; 20) mit einem Elektrolyt, das Ionen aufweist, zu verändern;
wobei der Schichtstapel (18; 18') so angeordnet wird, dass der Schichtstapel (18; 18') eine Sensorschicht (16; 34) mit einem zweiten Metalloxidmaterial aufweist, so dass die Zwischenschicht (14; 28) zwischen der Halbleiterstruktur (12) und der Sensorschicht (16; 34) angeordnet ist, und so dass die Sensorschicht (16; 34) ausgebildet ist, um mit dem Elektrolyt kontaktiert zu werden.

11. Verfahren gemäß Anspruch 10, bei dem das Herstellen der Zwischenschicht (28) folgende Schritte umfasst:
Erzeugen einer Metalloxidschicht (28'), die das erste Metalloxidmaterial aufweist;
Abscheiden einer Dotierungsschicht (32), die das Dotiermaterial (33) aufweist, an der Metalloxidschicht (28');
Tempern der Dotierungsschicht (32), so dass das Dotiermaterial (33) zumindest teilweise in die Metalloxidschicht (28') eindringt und so dass eine Metalloxidschicht (28") das Dotiermaterial (33) aufweist;
Tempern der Metalloxidschicht (28"), die das Dotiermaterial (33) aufweist, so dass eine Rekombination einer Gitterstruktur der Metalloxidschicht (28") und des Dotiermaterials (33) erhalten wird und so dass die Zwischenschicht (28) erhalten wird.

12. Verfahren gemäß Anspruch 11, bei dem die Dotierungsschicht (32) nach dem Schritt des Temperns der Dotierungsschicht (32) entfernt wird.

13. Verfahren gemäß Anspruch 10, bei der das Herstellen der Zwischenschicht (28) folgende Schritte umfasst:
Abscheiden einer Abstandsschicht (26), die das erste Metalloxidmaterial aufweist;
Anordnen eines zweiten Metallmaterials des Dotiermaterials (33) in der Abstandsschicht (26) mittels Implantation, so dass das erste Metalloxidmaterial das zweite Metallmaterial aufweist;
Tempern der Abstandsschicht (26) unter Sauerstoffzufuhr, so dass basierend auf einer Oxidation des zweiten Metallmaterials das Dotiermaterial (33) erhalten wird und so dass eine Rekombination einer Gitterstruktur der Abstandsschicht (26) erhalten wird und so dass die Zwischenschicht (28) aus der Abstandsschicht (26) erhalten wird, wobei die Zwischenschicht (28) das erste Metalloxidmaterial und das Dotiermaterial (33) aufweist.

14. Verfahren gemäß Anspruch 10, bei dem das Herstellen der Zwischenschicht (28) folgende Schritte umfasst:
Erzeugen einer Metallschicht (37), die ein erstes Metallmaterial aufweist;
Abscheiden einer Dotierungsschicht (32), die das Dotiermaterial (33) aufweist, an der Metallschicht (37);
Tempern der Dotierungsschicht (32), so dass das Dotiermaterial (33) zumindest teilweise in die Metallschicht (37) eindringt und so dass eine Metallschicht (37') das Dotiermaterial (33) aufweist;
Tempern der Metallschicht (37'), die das Dotiermaterial (33) aufweist, so dass eine Oxidation des ersten Metallmaterials und eine Rekombination einer Gitterstruktur der Metallschicht (37) und des oxidierten Dotiermaterials (33) erhalten wird und so dass die Zwischenschicht (28) erhalten wird.

15. Verfahren gemäß einem der Ansprüche 10-14, bei der ein Anteil des Dotiermaterials (33) in der Zwischenschicht (14; 28) von einer der Halbleiterstruktur (12) abgewandten Seite der Zwischenschicht (14; 28) ausgehend in eine Richtung hin zu der Halbleiterstruktur (12) abnimmt.

16. Verfahren gemäß einem der Ansprüche 10-15, bei dem das Dotiermaterial (33) eines aus einem Kalziumoxid, einem Strontiumoxid, einem Magnesiumoxid, einem Kalziumsilikat, einem Magnesiumsilikat, einem Strontiumsilikat, einem Gemisch umfassend Kalziumoxid und Strontiumoxid, einem Gemisch umfassend Kalziumoxid und Magnesiumoxid und einem Gemisch umfassend Strontiumoxid und Magnesiumoxid ist.

## Claims

1. Ion-sensitive structure (10; 20) comprising:
a semiconductor structure (12); and
a layer stack (18; 18') disposed on the semiconductor structure with a doped intermediate layer (14; 28) comprising a doping material (33) and a first metal oxide material doped with the doping material (33);
wherein the semiconductor structure (12) is configured to change an electric characteristic based on a contact of the ion-sensitive structure (10; 20) with an electrolyte comprising ions;
wherein the layer stack (18; 18') comprises a sensor layer (16; 34) comprising a second metal oxide material, wherein the intermediate layer (14; 28) is disposed between the semiconductor structure (12) and the sensor layer (16; 34), and wherein the sensor layer (16; 34) is configured to be contacted with the electrolyte;
wherein a proportion of the doping material (33) in the doped intermediate layer is greater than or equal to 0.03 % and less than or equal to 20 %.

2. Ion-sensitive structure according to claim 1, wherein the proportion of the doping material in the doped intermediate layer is greater than or equal to 1 % and less than or equal to 15 %.

3. Ion-sensitive structure according to claim 1 or 2, wherein the layer stack (18') comprises an insulator layer (22) disposed between the semiconductor structure (12) and the intermediate layer (28).

4. Ion-sensitive structure according to one of the previous claims, wherein the ion-sensitive structure (10; 20) is configured as ion-sensitive sensor.

5. Ion-sensitive structure according to one of the previous claims, wherein a proportion of the doping material (33) in the intermediate layer (14; 28) decreases starting from a side of the intermediate layer (14; 28) facing away from the semiconductor structure (12) in a direction towards the semiconductor structure (12).

6. Ion-sensitive structure according to one of the previous claims, wherein the intermediate layer (14; 28) comprises a junction from an amorphous (a) or polycrystalline structure side towards a crystalline (c) structure side, wherein the amorphous (a) or polycrystalline structure side is facing the semiconductor structure (12) and the crystalline (c) structure side is facing away from the semiconductor structure (12).

7. Ion-sensitive structure according to one of the previous claims, wherein the electric characteristic is disposed on or between structures of the semiconductor structure (12) or is processed into the same and is a breakdown voltage, an electric resistance or an electric capacitance,

8. Electrolyte-insulator structure comprising an ion-sensitive structure (10; 20) according to one of the previous claims.

9. Electrolyte-insulator structure according to claim 8, which is configured as ion-sensitive field effect transistor, as ion-sensitive sensor or as light-addressed sensor.

10. Method for producing an ion-sensitive structure, comprising:
providing a semiconductor structure (12); and
disposing a layer stack (18; 18') with a doped intermediate layer (14; 28) on the semiconductor structure (12);
wherein disposing the layer stack (18; 18') comprises a step of producing the intermediate layer (14; 28) such that a first metal oxide material is doped with a doping material (33), such that a proportion of the doping material in the doped intermediate layer is greater than or equal to 0.03 % and less than or equal to 20 %;
such that the semiconductor structure (12) is configured to change an electric characteristic based on a contact of the ion-sensitive structure (10; 20) with an electrolyte comprising ions;
wherein the layer stack (18; 18') is disposed such that the layer stack (18; 18') comprises a sensor layer (16; 34) comprising a second metal oxide material, such that the intermediate layer (14; 28) is disposed between the semiconductor structure (12) and the sensor layer (16; 34), and such that the sensor layer (16; 34) is configured to be contacted with the electrolyte.

11. Method according to claim 10, wherein producing the intermediate layer (28) comprises:
generating a metal oxide layer (28') comprising the first metal oxide material;
depositing a doping layer (32) comprising the doping material (33) on the metal oxide layer (28');
tempering the doping layer (32) such that the doping material (33) penetrates the metal oxide layer (28') at least partly and such that a metal oxide layer (28") comprises the doping material (33);
tempering the metal oxide layer (28") comprising the doping material (33), such that a recombination of a lattice structure of the metal oxide layer (28") and the doping material (33) is obtained and such that the intermediate layer (28) is obtained.

12. Method according to claim 11, wherein the doping layer (32) is removed after the step of tempering the doping layer (32).

13. Method according to claim 10, wherein producing the intermediate layer (28) comprises:
depositing a spacing layer (26) comprising the first metal oxide material;
disposing a second metal material of the doping material (33) in the spacing layer (26) by means of implantation, such that the first metal oxide material comprises the second metal material;
tempering the spacing layer (26) by oxygen supply such that based on oxidation of the second metal material the doping material (33) is obtained, and such that recombination of a lattice structure of the spacing layer (26) is obtained and such that the intermediate layer (28) is obtained from the spacing layer (26), wherein the intermediate layer (28) comprises the first metal oxide material and the doping material (33).

14. Method according to claim 10, wherein producing the intermediate layer (28) comprises:
generating a metal layer (37) comprising a first metal material;
depositing a doping layer (32) comprising the doping material (33) on the metal layer (37);
tempering the doping layer (32) such that the doping material (33) penetrates the metal layer (37) at least partly and such that the metal layer (37') comprises the doping material (33);
tempering the metal layer (37') comprising the doping material (33) such that an oxidation of the first metal material and a recombination of a lattice structure of the metal layer (37) and the oxidized doping material (33) is obtained and such that the intermediate layer (28) is obtained.

15. Method according to one of claims 10 to 14, wherein a proportion of the doping material (33) in the intermediate layer (14; 28) decreases starting from a side of the intermediate layer (14; 28) facing away from the semiconductor structure (12) in a direction towards the semiconductor structure (12).

16. Method according to one of claims 10 to 15, wherein the doping material (33) is one of calcium oxide, strontium oxide, magnesium oxide, calcium silicate, magnesium silicate, strontium silicate, a mixture including calcium oxide and strontium oxide, a mixture including calcium oxide and magnesium oxide and a mixture including strontium oxide and magnesium oxide.

## Revendications

1. Structure sensible aux ions (10; 20), avec:
une structure semi-conductrice (12); et
un empilement de couches (18; 18') disposé sur la structure semi-conductrice avec une couche intermédiaire dopée (14; 28) qui présente un matériau de dopage (33) et un premier matériau d'oxyde de métal qui est dopé du matériau de dopage (33),
dans laquelle la structure semi-conductrice (12) est conçue pour modifier une propriété électrique sur base d'un contact de la structure sensible aux ions (10; 20) avec un électrolyte qui présente des ions;
dans laquelle l'empilement de couches (18; 18') présente une couche de capteur (16; 34) avec un deuxième matériau d'oxyde de métal, dans laquelle la couche intermédiaire (14; 28) est disposée entre la structure semi-conductrice (12) et la couche de capteur (16; 34), et dans laquelle la couche de capteur (16; 34) est conçue pour être amenée en contact avec l'électrolyte;
dans laquelle une part du matériau de dopage dans la couche intermédiaire dopée est supérieure ou égale à 0,03 % et inférieure ou égale à 20 %.

2. Structure sensible aux ions selon la revendication 1, dans laquelle la part du matériau de dopage dans la couche intermédiaire dopée est supérieure ou égale à 1 % et inférieure ou égale à 15 %.

3. Structure sensible aux ions selon la revendication 1 ou 2, dans laquelle l'empilement de couches (18') présente une couche d'isolation (22) qui est disposée entre la structure semi-conductrice (12) et la couche intermédiaire (28).

4. Structure sensible aux ions selon l'une des revendications précédentes, dans laquelle la structure sensible aux ions (10; 20) est réalisée sous forme de capteur sensible aux ions.

5. Structure sensible aux ions selon l'une des revendications précédentes, dans laquelle une part du matériau de dopage (33) dans la couche intermédiaire (14; 28) diminue, en partant d'un côté de la couche intermédiaire (14; 28) opposée à la structure semi-conductrice (12), dans une direction vers la structure semi-conductrice (12).

6. Structure sensible aux ions selon l'une des revendications précédentes, dans laquelle la couche intermédiaire (14; 28) présente une transition d'un côté de structure amorphe (a) ou poly-cristallin vers un côté de structure cristalline (c), dans laquelle le côté de structure amorphe (a) ou poly-cristallin est disposé orienté vers la structure semi-conductrice (12) et le côté de structure cristallin (c) est disposé opposé à la structure semi-conductrice (12).

7. Structure sensible aux ions selon l'une des revendications précédentes, dans lequel la propriété électrique est réalisée sur ou entre les structures de la structure semi-conductrice (12) ou est traitée dans cette dernière et est une tension de rupture, une résistance électrique ou une capacité électrique.

8. Structure électrolyte-isolant à structure sensible aux ions (10; 20) selon l'une des revendications précédentes.

9. Structure électrolyte-isolant selon la revendication 8, qui est réalisée sous forme de transistor à effet de champ sensible aux ions, sous forme de capteur sensible aux ions ou sous forme de capteur actionné par de la lumière.

10. Procédé de fabrication d'une structure sensible aux ions, aux étapes suivantes consistant à:
prévoir une structure semi-conductrice (12); et
disposer un empilement de couches (18; 18') avec une couche intermédiaire dopée (14; 28) sur la structure semi-conductrice (12);
dans lequel la disposition de l'empilement de la couche (18; 18') présente une étape consistant à réaliser la couche intermédiaire (14; 28), de sorte qu'un premier matériau d'oxyde de métal soit dopé d'un matériau de dopage (33), de sorte qu'une part du matériau de dopage dans la couche intermédiaire dopée soit supérieure ou égale à 0,03 % et inférieure ou égale à 20 %;
de sorte que la structure semi-conductrice (12) soit conçue pour modifier une propriété électrique sur base d'un contact de la structure sensible aux ions (10; 20) avec un électrolyte qui présente des ions;
dans lequel l'empilement de couches (18; 18') est disposé de sorte que l'empilement de couches (18; 18') présente une couche de capteur (16; 34) avec un deuxième matériau d'oxyde de métal, de sorte que la couche intermédiaire (14; 28) soit disposée entre la structure semi-conductrice (12) et la couche de capteur (16; 34), et de sorte que la couche de capteur (16; 34) soit conçue pour être amenée en contact avec l'électrolyte.

11. Procédé selon la revendication 10, dans lequel la réalisation de la couche intermédiaire (28) comporte les étapes suivantes consistant à:
générer une couche d'oxyde de métal (28') qui présente le premier matériau d'oxyde de métal;
déposer sur la couche d'oxyde de métal (28') une couche de dopage (32) qui présente le matériau de dopage (33);
recuire la couche de dopage (32) de sorte que le matériau de dopage (33) pénètre au moins partiellement dans la couche d'oxyde de métal (28') et de sorte qu'une couche d'oxyde de métal (28") présente le matériau de dopage (33);
recuire la couche d'oxyde de métal (28") qui présente le matériau de dopage (33), de sorte que soit obtenue une recombinaison d'une structure de grille de la couche d'oxyde de métal (28") et du matériau de dopage (33) et de sorte que soit obtenue la couche intermédiaire (28).

12. Procédé selon la revendication 11, dans lequel la couche de dopage (32) est éliminée après l'étape consistant à recuire la couche de dopage (32).

13. Procédé selon la revendication 10, dans lequel la réalisation de la couche intermédiaire (28) comporte les étapes suivantes consistant à:
déposer une couche d'écartement (26) qui présente le premier matériau d'oxyde de métal;
disposer un deuxième matériau métallique du matériau de dopage (33) dans la couche d'écartement (26) au moyen d'une implantation, de sorte que le premier matériau d'oxyde de métal comporte le deuxième matériau métallique;
recuire la couche d'écartement (26) sous apport d'oxygène, de sorte que sur base d'une oxydation du deuxième matériau métallique soit obtenu le matériau de dopage (33) et de sorte que soit obtenue une recombinaison d'une structure de grille de la couche d'écartement (26) et de sorte que la couche intermédiaire (28) soit obtenue à partir de la couche d'écartement (26), où la couche intermédiaire (28) présente le premier matériau d'oxyde de métal et le matériau de dopage (33).

14. Procédé selon la revendication 10, dans lequel la réalisation de la couche intermédiaire (28) comporte les étapes suivantes consistant à:
générer une couche de métal (37) qui présente un premier matériau métallique;
déposer une couche de dopage (32) qui présente le matériau de dopage (33) sur la couche de métal (37);
recuire la couche de dopage (32) de sorte que le matériau de dopage (33) pénètre au moins partiellement dans la couche de métal (37) et de sorte qu'une couche de métal (37') présente le matériau de dopage (33);
recuire la couche de métal (37') qui présente le matériau de dopage (33), de sorte que soit obtenue une oxydation du premier matériau métallique et une recombinaison d'une structure de grille de la couche de métal (28") et du matériau de dopage (33) oxydé et de sorte que soit obtenue la couche intermédiaire (28).

15. Procédé selon l'une des revendications 10 à 14, dans lequel une part du matériau de dopage (33) dans la couche intermédiaire (14; 28) diminue, en partant d'un côté de de la couche intermédiaire (14; 28) opposée à la structure semi-conductrice (12), dans une direction vers la structure semi-conductrice (12).

16. Procédé selon l'une des revendications 10 à 15, dans lequel le matériau de dopage (33) est l'un parmi un oxyde de calcium, un oxyde de strontium, un oxyde de magnésium, un silicate de calcium, un silicate de magnésium, un silicate de strontium, un mélange comportant de l'oxyde de calcium et de l'oxyde de strontium, un mélange comportant de l'oxyde de calcium et de l'oxyde de magnésium et un mélange comportant de l'oxyde de strontium et de l'oxyde de magnésium.
